# EUROPEAN PATENT SPECIFICATION

(11) **EP 4 267 328 B1**
(45) Date of publication and mention of the grant of the patent: **13.11.2024**
(21) Application number: 21844403.2
(22) Date of filing: 22.12.2021
(51) Int. Cl.: B22D 11/057, B21C 37/08, B23K 20/12, B23K 103/12

(54) **METHOD FOR MANUFACTURING AN INGOT MOLD AND A WELDING MACHINE FOR AN INGOT MOLD**
VERFAHREN ZUR HERSTELLUNG EINER KOKILLE UND SCHWEISSMASCHINE FÜR EINE KOKILLE
PROCÉDÉ DE FABRICATION D'UNE LINGOTIÈRE ET MACHINE DE SOUDAGE POUR UNE LINGOTIÈRE

(30) Priority: 22.12.2020 IT 202000031940
(43) Date of publication of application: 01.11.2023
(73) Proprietor: MIWENTI S.R.L., 24062 Costa Volpino (BG) (IT)
(72) Inventor: BIANCHI, Renato, 24062 Costa Volpino, Bergamo (IT)
(74) Representative: De Lorenzo, Danilo
(86) International application number: PCT/IB2021/062157
(87) International publication number: WO 2022/137146

(56) References cited:
- DE-A1- 102010 018 504
- DE-A1- 19 750 858
- US-A1- 2008 023 524
- US-B2- 8 261 959
- CHEN BINXI ET AL: "Friction stir welding of small-dimension Al3003 and pure Cu pipes", JOURNAL OF MATERIALS PROCESSING TECHNOLOGY, ELSEVIER, NL, vol. 223, 7 April 2015 (2015-04-07), pages 48 - 57, XP029236885, ISSN: 0924-0136, DOI: 10.1016/J.JMATPROTEC.2015.03.044

## Description

This invention is generally within the field of manufacturing ingot molds suitable for accommodating molten metal in the industrial billet production process, such as by continuous casting.

More particularly, this invention relates to a method for manufacturing an ingot mold and a welding machine for an ingot mold.

In the iron and steel industry, it is known, e.g. from DE 19750858 A1, to make ingot molds out of copper by rolling a copper panel in such a way as to create a cylindrical cavity and a subsequent welding between two opposite flaps of the panel placed in close proximity to each other, so as to fully close the only longitudinal fissure remaining from the rolling process.

Said process of welding the two flaps is carried out by means of the known fusion welding of the two flaps, after having carefully heated the entire piece of copper.

Disadvantageously, this known welding process involves numerous issues. First of all, it is necessary to heat the entire copper piece, which requires high energy consumption and heating times; moreover, the aforementioned welding, performed manually, is highly dependent on the skills of the specific operator carrying out the welding, thus generating inhomogeneity both inside the single ingot mold and between ingot molds. Furthermore, precisely because of the way it is made, said weld often has internal defects which over time may lead to the failure of the welded region.

Furthermore, the welding carried out with the known art does not always succeed in satisfying the tolerance requirements required for the production of high-quality ingot molds.

The object of this invention is to eliminate the aforesaid drawbacks of the methods of the prior art for manufacturing ingot molds of copper. In particular, one object of this invention is to provide a method for manufacturing an ingot mold that is capable of reducing the time required to manufacture ingot molds and requires fewer resources.

According to the invention, these objects are achieved by a method for manufacturing an ingot mold and an ingot welding machine according to the attached independent claims. Preferred embodiments of the invention are defined in the dependent claims.

The features and advantages of the method for manufacturing an ingot mold and a welding machine for ingot molds will be evident from the description below, given by way of non-limiting example, according to the attached figures, in which:

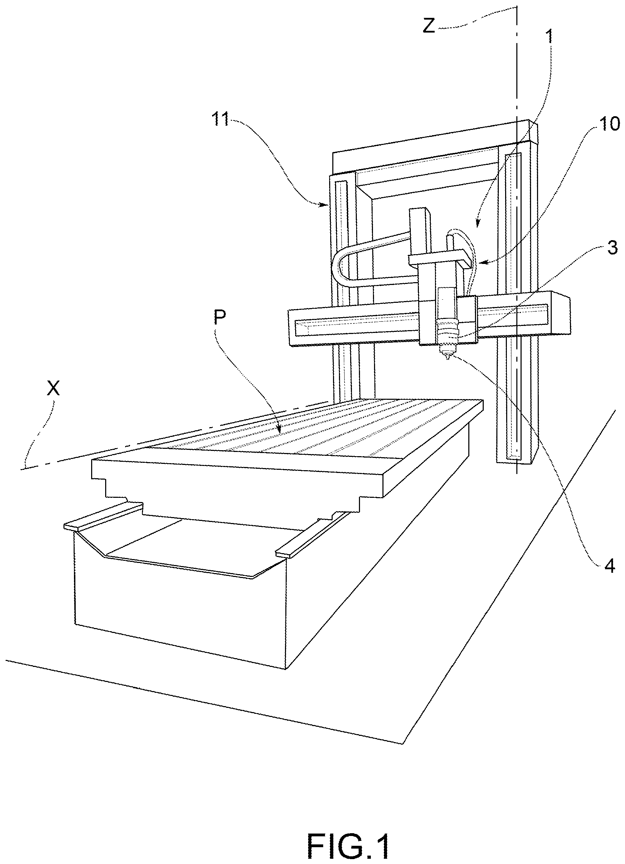

- Fig. 1 shows a perspective view of a welding machine according to an embodiment of this invention;

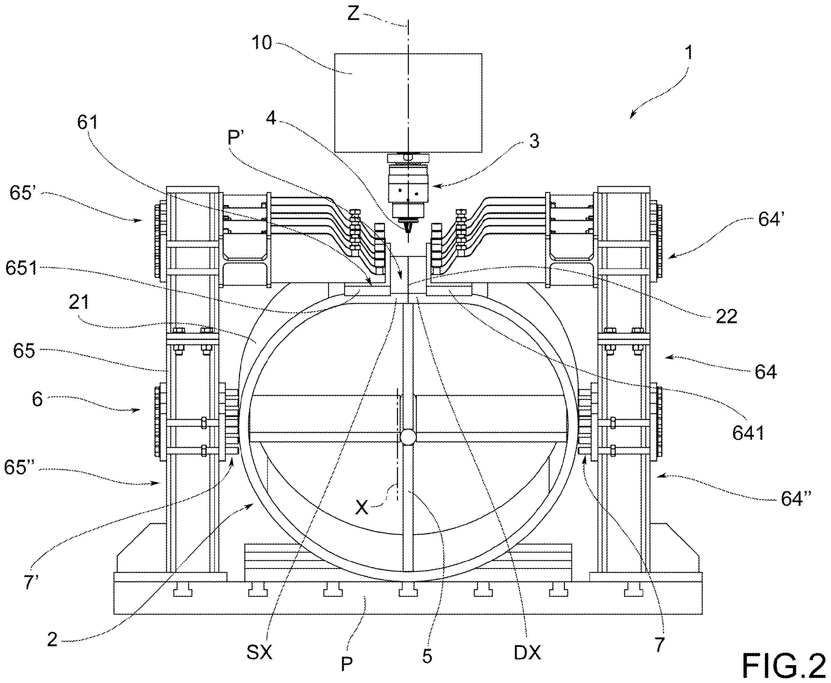

- Fig. 2 shows a front view of a welding machine according to an embodiment of this invention in a step of the welding method;
- Fig. 3 shows a detail of a step of the method for manufacturing an ingot mold according to an embodiment of this invention;
- Fig. 4 shows a detail of a step of the method for manufacturing an ingot mold, subsequent to the step in Fig. 3, according to an embodiment of this invention;
- Fig. 5 shows a detail of a step of the method for manufacturing an ingot mold, subsequent to the step in Fig. 4, according to an embodiment of this invention;

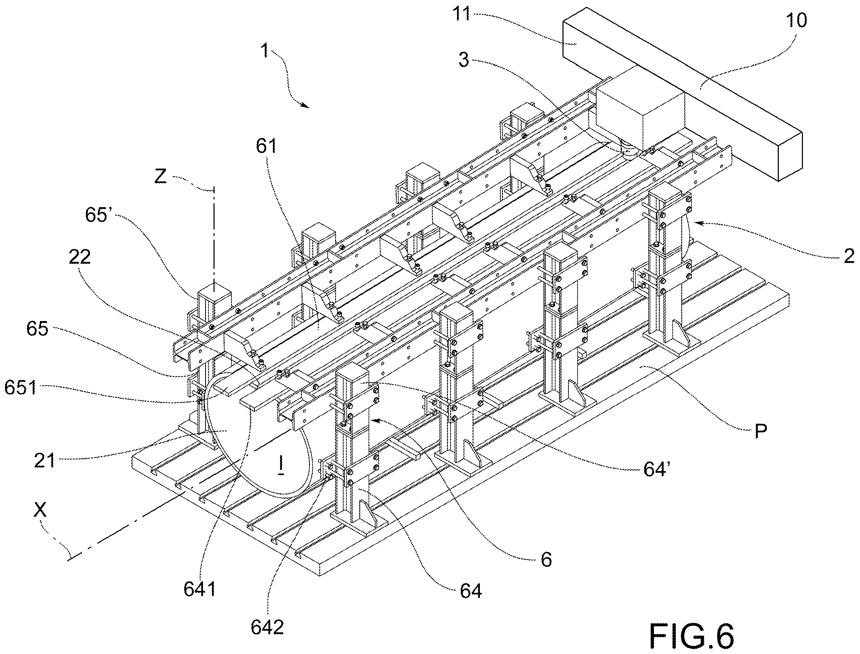

- Fig. 6 shows a perspective view of a welding machine according to an embodiment of this invention;

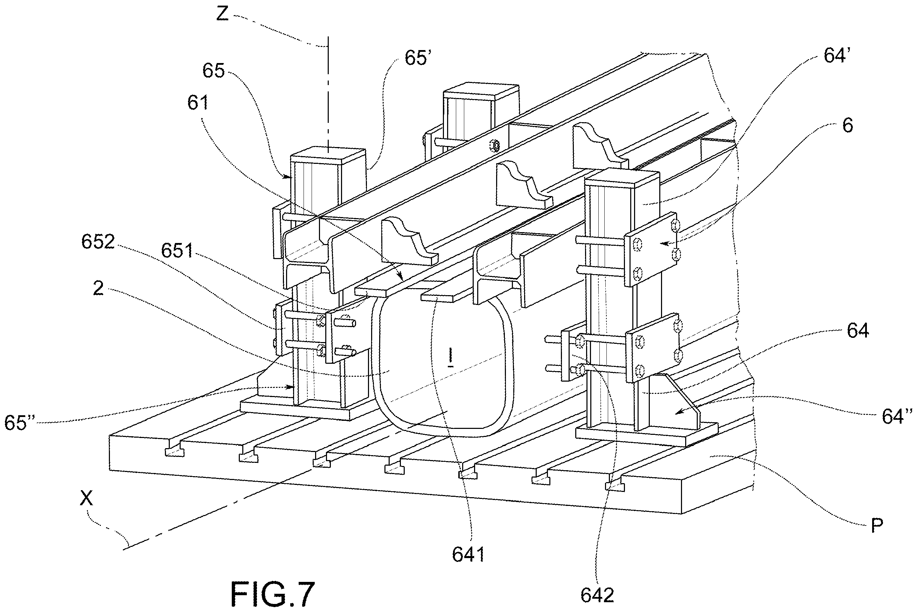

- Fig. 7 shows a detail of the welding machine of Fig. 6, but in which the mold has a different cross section geometry;

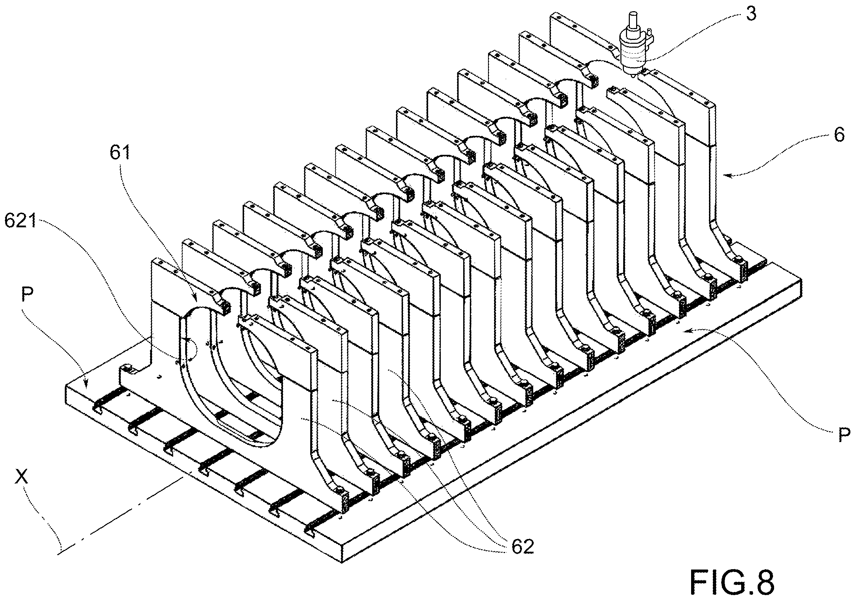

- Fig. 8 shows a perspective view of a welding machine according to a further embodiment of this invention;

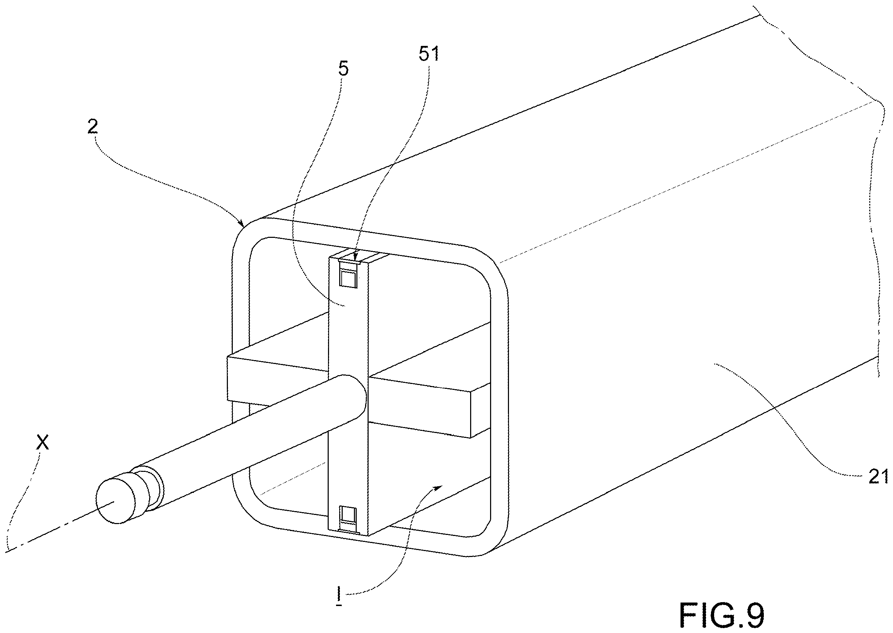

- Fig. 9 shows a support structure for a welding machine according to an embodiment of this invention;

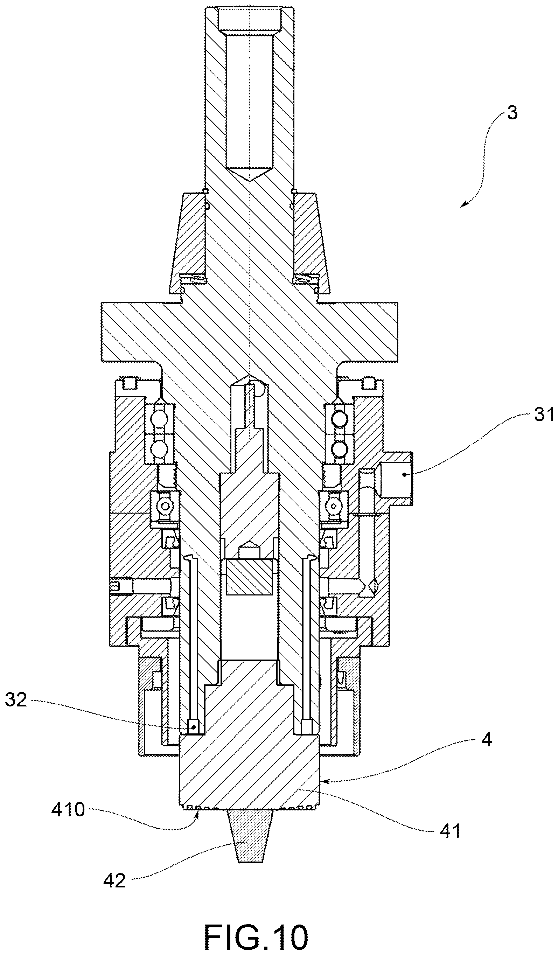

- Fig. 10 shows a tool holder head for a welding machine according to an embodiment of this invention;
- Fig. 11 shows a tool for a tool holder head for a welding machine, according to an embodiment of this invention.

According to the attached figures, a welding machine 1 for an ingot mold 2 for manufacturing an ingot mold 2 according to the method for manufacturing an ingot mold which will be described hereinafter has been indicated in its entirety with the reference number 1.

The method for manufacturing an ingot mold 2 for casting comprises the steps of:
a) providing a copper sheet 21 wrapped about a main extension direction so as to encompass an inner cavity I and so that a left flap SX and a right flap DX of the metal sheet 21 are arranged close together one in front of the other; in this step, said metal sheet 21 is arranged on a work plane P, for example a work plane of a numerically-controlled machine tool;
b) providing a tool holder head 3, which is translatable at least along a direction parallel to the main extension direction X, supporting a tool 4 for friction stir welding;
c) rotating the tool 4 at the right flap DX and the left flap SX of the metal sheet 21 and proceeding with the welding between the right flap DX and the left flap SX by friction stir welding until an ingot mold 2 is obtained.

Preferably, before step c), the method comprises the step of positioning a support structure 5 inside the inner cavity I. Said support structure 5 comprises a backing surface 51 which counteracts the mechanical pressing force exerted by the tool on the metal sheet when carrying out step c).

Preferably, the method provides for the step of cooling the tool holder head 3 by means of a cooling liquid during step c).

According to a particularly advantageous variant, during step c), the method includes dispensing an inert gas, for example argon, on the welding joint being formed between the right flap DX and the left flap SX, about the rotating tool 4, so as to avoid the inclusion of other components in the weld.

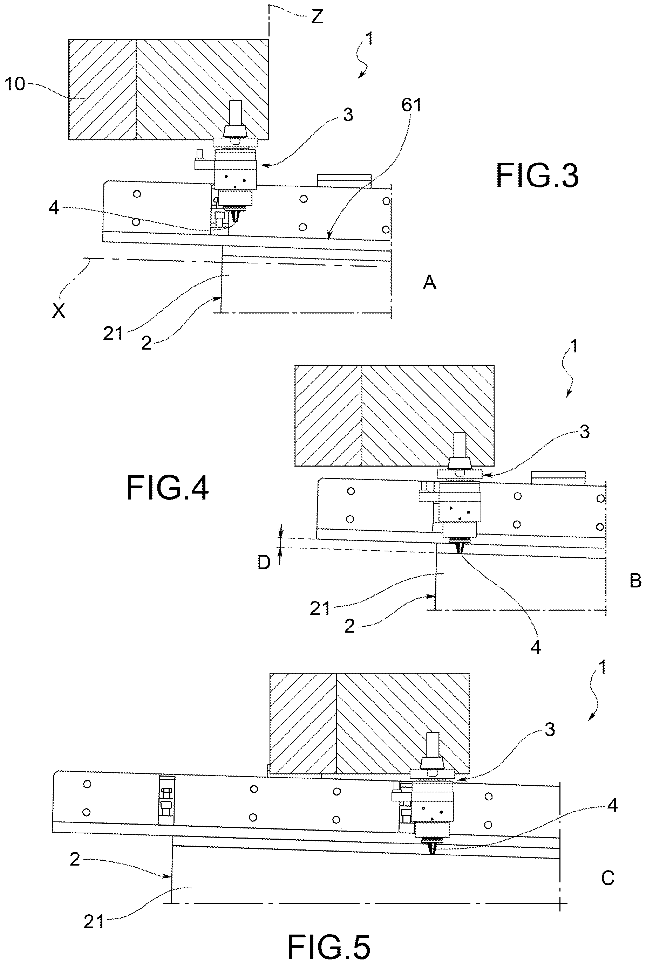

According to a preferred embodiment of the method, step c) comprises the following steps, preferably carried out in the order indicated:
c1) rotating the tool 4 at the right flap DX and the left flap SX of the metal sheet (step A in Fig. 3);
c2) proceeding with an initial penetration of the tool 4 in the material of the metal sheet 21 until reaching a predetermined depth D (Fig. 4);
c3) detecting a force value generated between the tool 4 and the metal sheet 21 by means of a force sensor arranged in the tool holder head 3;
c4) possibly simultaneously with step c3), detecting a temperature value by means of a temperature sensor positioned on the tool holder head 3;
c5) when the force value detected by the force sensor exceeds a predetermined force threshold and when the temperature value measured by the temperature sensor exceeds a predetermined temperature value, activating the advancement of the tool holder head 3 along the main extension direction X.

Preferably, the predetermined force threshold is any value at least equal to 9000N and the predetermined temperature value is at least equal to 600°C and lower than 700°C and the number of revolutions of the tool 4 is at least equal to 300 rpm.

According to an aspect of this invention, it is clear that the method described above is also aimed at welding between a right flap DX and a left flap SX of two different metal sheets placed alongside each other. That is to say, in step a), instead of providing a metal sheet wrapped in such a way so that the two right and left flaps belong to the same sheet, a first and a second sheet may also be arranged next to each other so that the right flap DX of the first sheet is placed alongside the left flap SX of the second sheet.

According to a variant of the method, wherein a right flap DX and a left flap SX of one or more copper sheets having a plate thickness of at least 15 millimeters, preferably 19-22 millimeters, are to be welded, the method provides for maintaining an average temperature of the metal sheet in the vicinity of the tool 4 of about 700°C with an advancement rate in the main extension direction X of about 28 millimeters per minute and a tool 4 speed of about 350 rpm. This results in a defect-free weld.

It is understood that a subject of this invention is a welding machine 1 for an ingot mold 2.

The welding machine 1 for an ingot mold comprises a tool holder head 3 supporting a friction stir welding tool 4 and a tool holder head movement apparatus 10, such as a three-axis numerical control machine, supporting the tool holder head 3 and comprising at least one translation assembly 11, such as one or more carts, suitable for the controlled translation of the tool holder head 3 in a direction parallel to a main extension direction X of the ingot mold 2 and in a vertical direction Z incident or perpendicular to the main extension direction X.

Preferably, the tool 4 is made of a D2M W-Ni-Mo-Fe alloy (i.e., a tungsten, nickel, molybdenum, and iron alloy) or a tungsten-rhenium alloy 75-25 or a silicon nitride alloy.

Preferably, the welding machine 1 comprises a work plane P suitable to support the ingot mold 2 during welding and a locking frame 6 releasably fixed to the work plane P. The locking frame 6 comprises an upper frame portion 61 spaced from the work plane P in the vertical direction Z. Said upper frame portion 61 is suitable to exert a pressing force on the ingot mold 2 in the vertical direction P in the vicinity of a fissure 22 of the ingot frame 2 to be welded.

According to an embodiment, the locking frame 6 comprises a plurality of plates 62 spaced apart along the main extension direction X and having a concave surface 621 shaped to accommodate and hold the ingot mold 2 in place in at least one direction perpendicular to the main extension direction X.

According to a variant embodiment, the locking frame comprises at least two vertical uprights 64, 65, fixed to the work plane P each on the opposite side to the ingot mold 2. On each of said vertical uprights 64, 65, a listel 641, 651 is fixed in an upper region 64', 65' of the vertical upright, mainly extending in the main extension direction X and which is suitable for exerting a pressing force in the vertical direction Z.

Preferably, the welding machine 1 comprises lower fastening means 642, 652 fixed in a lower region 64", 65" of the upright, closest to the work plane P with respect to the upper region 64', 65'. Spacer elements 7, 7' are fixed to said lower fastening means 642, 652, for example screws, suitable for laterally constraining the ingot mold to prevent it from moving along the transverse direction Y perpendicular to the main extension direction X and the vertical direction Z.

According to an advantageous embodiment, the welding machine 1 comprises a support structure 5 suitable for being positioned inside the inner cavity I of the ingot mold. Said support structure 5 comprises a backing surface 51 that counteracts the mechanical pressing force exerted by the tool 4 on the metal sheet while carrying out the welding.

Preferably, the tool holder head 3 comprises an internal liquid cooling circuit 31 and at least one inner welding gas conveyance circuit 32. Said inner welding gas conveyance circuit 32 comprises a gas outlet mouth positioned about the tool and suitable for delivering a gas, preferably an inert gas, so as to ensure an inert atmosphere during welding to avoid inclusions of other substances in the weld.

According to an aspect of this invention, the tool 4 is made in one piece comprising a base portion 41 anchorable to the tool holder head 3 and a shank portion 42, which extends from the base portion between a base end 42' and a head end 42" mainly along an axial direction K, parallel to or coincident with the rotation axis 400 of the tool when in use. The shank portion 42 has a tapered shape toward the head end 42" . Preferably, it has a substantially frustoconical shape with a smaller base near the head end 42".

Additionally, the shank portion 42 comprises a lateral surface 420, extending about and along the axial direction K, provided with protrusions 421 and depressions 422. Preferably, said protrusions and depressions are the ridges and valleys of a threading obtained on said lateral surface 420. In particular, said protrusions and depressions 421, 422 are shaped to mix and convey the molten metal toward the surface of the metal sheet being welded during the welding operation, i.e., along the axial direction K and toward the base portion 41 of the tool 4.

Additionally, according to an advantageous embodiment, the lateral surface 42 comprises one or more cuts or breaks in the tapered shape. Preferably, said cuts or breaks are flat lateral faces 423, 423' arranged about the axial direction K and each lying in a plane secant to the axial direction, i.e., said lateral faces are inclined so as to be convergent towards the head end 42".

Preferably, in the variant with a frustoconically shaped shank portion 42, the lateral faces 423, 423' are flat millings of the curvilinear conical side surface 42. Preferably, this variant comprises three lateral faces 423, 423', 423" arranged about the axial direction K and spaced angularly 120° apart.

During the welding operation, i.e., while the tool 4 is rotating in the metal sheet, the shank portion 42 is subjected to a torque about the axial direction K, such as to induce a slight torsion of the shank portion 42. This results in the lateral faces 423, 423' deforming to take on a curved or twisted or serpentine shape during the welding action. Said curved, serpentine, or twisted shape determines preferential channels for circulating the molten metal of the sheet subjected to welding, facilitating the mixing of the metal between the two right DX and left SX flaps of the sheet to be welded, for example, the transport of the molten material from the right flap to the left flap or vice versa. This ensures that the joint is properly and correctly welded.

Additionally, the curved or serpentine or twisted shape contributes to the conveyance of molten metal to the outermost surface of the sheet 21.

According to an embodiment of the invention, the base portion 41 comprises a base surface 410 extending about the shank portion 42, preferably completely about the shank portion 42, in a plane perpendicular to the axial direction K. Said base surface 410 is suitable to come in contact with the outermost surface of the metal sheet 21 during the welding step. Preferably, one or more grooves 411 or reliefs shaped for determining the displacement of the fluid metal material toward the rotation axis 400 of the tool are made on said base surface 410.

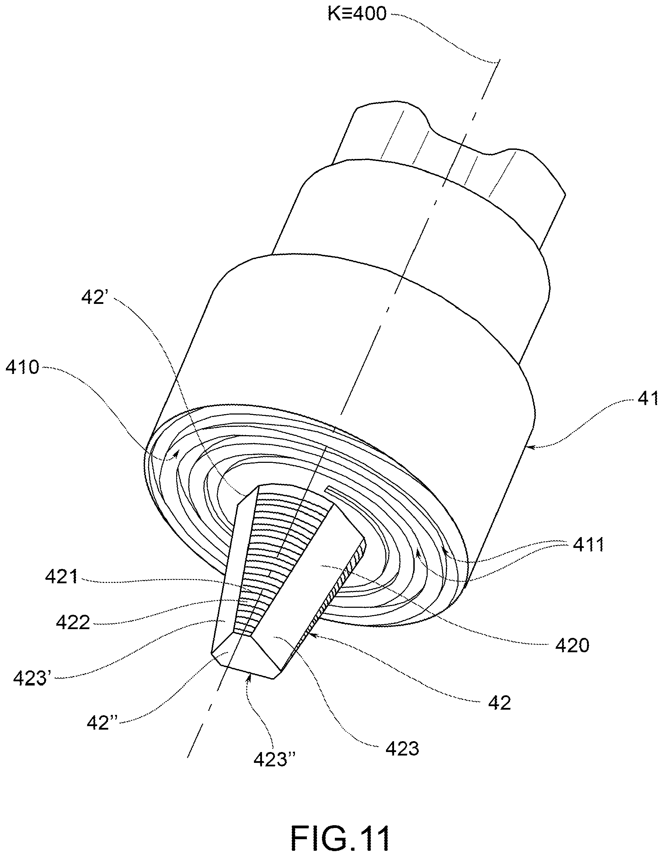

According to a preferred embodiment, the one or more grooves 411 or reliefs are shaped as a flat spiral, as for example shown in Fig. 11.

According to a preferred embodiment of the invention, the welding step, i.e., for example during step c) or c5) of the method described above, occurs with an inclination of the rotation axis 400 of the tool 4 non-perpendicular to the tangent plane P' the left flap SX and the right flap DX of the metal sheet 21. In other words, for example, the rotation axis 400 of the tool 4 is not perpendicular to the work plane P but is inclined with respect to the perpendicular to the work plane P by at least 1°, preferably at least 2° (for example as shown in Fig. 3, 4 and 5). This is the case, for example, because the work plane P of the welding machine 1 is tiltable at will, i.e., the welding machine comprises a device for tilting the work plane P. Alternatively or simultaneously, this occurs because the tool holder head movement apparatus 10 is configured to support the tool holder head 3 in such a way that the tool 4 is made to advance along the main extension direction X but with the rotation axis 400 inclined with respect to the perpendicular to the tangent plane P'.

Innovatively, the method for making an ingot mold and the welding machine for an ingot mold according to this invention enable the problems encountered in the prior art in making ingot molds to be successfully overcome.

In particular, the method for making an ingot mold according to this invention is able to reduce the time required to make ingot molds, requires fewer resources, and achieves improved weld quality with respect to the welds made using the techniques of the prior art.

Advantageously, the manufacturing method according to this invention does not require preheating the ingot mold for its welding, thus saving considerable time and energy resources.

In addition, the presence of a releasable locking frame makes it possible to secure ingot molds of different diameters and lengths to the work plane in a stable manner, thus ensuring flexibility in the use of the welding machine and an adequate locking to avoid possible displacements that could affect the quality of the weld.

Moreover, in an advantageous way, the presence of a support structure suitable for being positioned inside the inner cavity of the ingot mold allows the mechanical pressing force exerted by the tool 4 on the sheet during the execution of the weld to be counteracted and ensures an improved quality of the weld, since the sheet is less subject to localized bending during welding.

According to a further aspect, the tool 4 equipped with the shank portion 42 with a tapered shape and provided with protrusions 421 and depressions 422 for effectively conveying the fluid metal during welding, allows the welding operation to be optimized both from the point of view of the quality of the weld and from the point of view of the efficiency of the entire operation.

It is clear that a person skilled in the art, in order to satisfy contingent and specific needs, could make modifications to the invention described above, said modifications being all contained within the scope of protection as defined in the following claims.

## Claims

1. A method for manufacturing an ingot mold (2), for example an ingot mold for casting, comprising the steps of:
a) providing a copper sheet (21) wrapped about a main extension direction (X) so as to encompass an inner cavity (I) and so that a left flap (SX) and a right flap (DX) of the metal sheet (21) are arranged close together in front of each other, said metal sheet (21) being arranged on a work plane (P);
b) providing a tool holder head (3), which is translatable at least along a direction parallel to the main extension direction (X), said tool holder head (3) supporting a tool (4) for friction stir welding;
c) rotating the tool (4) at the right flap (DX) and the left flap (SX) of the metal sheet (21) and proceeding with welding between the right flap (DX) and the left flap (SX) by friction stir welding until an ingot mold (2) is obtained.

2. Method according to claim 1, wherein before step c), the method comprises the step of positioning a support structure (5) inside the inner cavity (I), said support structure (5) comprising a backing surface (51) which counteracts the mechanical pressing force exerted by the tool on the metal sheet when carrying out step c).

3. Method according to any one of the preceding claims, comprising the step of cooling the tool holder head (3) by means of a cooling liquid during step c).

4. Method according to any one of the preceding claims, wherein, during step c), the method includes dispensing an inert gas, such as argon, on the welding joint being formed between the right flap (DX) and the left flap (SX), around the rotating tool (4).

5. Method according to any one of the preceding claims, wherein step c) comprises the following steps:
c1) rotating the tool (A) at the right flap (DX) and the left flap (SX) of the metal sheet;
c2) proceeding with an initial penetration of the tool (4) into the material of the metal sheet (21) until reaching a predetermined depth (D);
c3) detecting a force value generated between the tool (4) and the metal sheet (21) by means of a force sensor arranged in the tool holder head (3);
c4) detecting a temperature value by means of a temperature sensor positioned on the tool holder head (3) ;
c5) when the force value detected by the force sensor exceeds a predetermined force threshold and when the temperature value measured by the temperature sensor exceeds a predetermined temperature value, activating the advancement of the tool holder head along the main extension direction (X).

6. Method according to claim 5, wherein the predetermined force threshold is any value at least equal to 9000N and wherein the predetermined temperature value is at least equal to 600°C and lower than 700°C and wherein the number of revolutions of the tool (4) is at least equal to 300 rpm.

7. A welding machine (1) for an ingot mold (2), for manufacturing an ingot mold (2) according to the method according to any one of the preceding claims, said ingot mold welding machine (1) comprising:
- a tool holder head (3) supporting a tool (4) for friction stir welding;
- a tool holder head movement apparatus (10), for example a numerical control machine with three axes, supporting the tool holder head (3) and comprising at least one translation assembly (11), for example one or more carts, suitable for translating the tool holder head (3) in a controlled manner in a direction parallel to a main extension direction (X) of the ingot mold (2) and in a vertical direction (Z) which is incident or perpendicular to the main extension direction (X).

8. Welding machine (1) for an ingot mold (2) according to claim 7, comprising a work plane (P) suitable for supporting the ingot mold (2) during the welding and a locking frame (6) releasably fixed to the work plane (P) and comprising an upper frame portion (61) spaced apart from the work plane (P) in the vertical direction (Z) and suitable for exerting a pressing force on the ingot mold (2) in the vertical direction (Z) close to a fissure (22) in the ingot mold (2) to be welded.

9. Welding machine (1) for an ingot mold (2) according to claim 8, wherein the locking frame (6) comprises a plurality of plates (62) mutually spaced apart along the main extension direction (X) and having a shaped concave surface (621) for housing and keeping the ingot mold (2) in place at least in a direction perpendicular to the main extension direction (X).

10. Welding machine (1) for an ingot mold (2) according to claim 8, wherein the locking frame comprises at least two vertical uprights (64, 65), fixed to the work plane (P) each on the opposite side to the ingot mold (2), a listel (641, 651) being fixed, in an upper region (64', 65') of the vertical upright on each of said vertical uprights (64, 65), mainly extending in the main extension direction (X) and which is suitable for exerting a pressing force in the vertical direction (Z).

11. Welding machine (1) for an ingot mold (2) according to claim 10, comprising lower fastening means (642, 652), fixed in a lower region (64", 65") of the upright closest to the work plane (P) with respect to the upper region (64', 65'), spacer elements (7, 7') being fixed to said lower fastening means (642, 652), for example screws, suitable for laterally constraining the ingot mold to prevent it from moving along the transverse direction (Y) perpendicular to the main extension direction (X) and the vertical direction (Z).

12. Welding machine (1) for an ingot mold (2) according to any one of the preceding claims, comprising a support structure (5), suitable for being positioned inside the inner cavity (I) of the ingot mold, said support structure (5) comprising a backing surface (51) which counteracts the mechanical pressing force exerted by the tool (4) on the metal sheet when carrying out the welding.

13. Welding machine (1) for an ingot mold (2) according to any one of the preceding claims, wherein the tool holder head (3) comprises an inner liquid cooling circuit and at least one inner welding gas conveying circuit, said inner welding gas conveying circuit comprising a gas outlet mouth positioned about the tool and suitable for dispensing a gas, preferably an inert gas, so as to ensure an inert atmosphere during the welding to prevent inclusions of other substances in the welding.

14. Welding machine (1) for an ingot mold (2) according to any one of the preceding claims, wherein the tool (4) is made of a D2M W-Ni-Mo-Fe alloy.

## Patentansprüche

1. Verfahren zum Herstellen einer Kokille (2), beispielsweise einer Kokille zum Gießen, umfassend die Schritte von:
a) einem Bereitstellen eines Kupferblechs (21), welches um eine Haupterstreckungsrichtung (X) derart gewickelt ist, dass es eine innere Kavität (I) umgibt und sodass eine linke Lasche (SX) und eine rechte Lasche (DX) des Metallblechs (21) nahe zusammen voreinander angeordnet sind, wobei das Metallblech (21) auf einer Arbeitsebene (P) angeordnet wird;
b) einem Bereitstellen eines Werkzeughaltekopfs (3), welcher wenigstens entlang einer Richtung parallel zu der Haupterstreckungsrichtung (X) verlagerbar ist, wobei der Werkzeughaltekopf (3) ein Werkzeug (4) zum Rührreibschweißen stützt;
c) einem Rotieren des Werkzeugs (4) an der rechten Lasche (DX) und der linken Lasche (SX) des Metallblechs (21) und eines Fortfahrens mit einem Schweißen zwischen der rechten Lasche (DX) und der linken Lasche (SX) durch Rührreibschweißen, bis eine Kokille (2) erhalten wird.

2. Verfahren nach Anspruch 1, wobei das Verfahren vor Schritt c) den Schritt eines Positionierens einer Stützstruktur (5) innerhalb der inneren Kavität (I) umfasst, wobei die Stützstruktur (5) eine Unterstützungsfläche (51) umfasst, welche der mechanischen Druckkraft entgegenwirkt, welche durch das Werkzeug auf das Metallblech ausgeübt wird, wenn Schritt c) ausgeführt wird.

3. Verfahren nach einem der vorhergehenden Ansprüche, umfassend den Schritt eines Kühlens des Werkzeughaltekopfs (3) während Schritt c) mit Hilfe einer Kühlflüssigkeit.

4. Verfahren nach einem der vorhergehenden Ansprüche, wobei das Verfahren während Schritt c) ein Dispensieren eines Inertgases, wie zum Beispiel Argon, auf die Schweißnaht um das rotierende Werkzeug (4) umfasst, welche zwischen der rechten Lasche (DX) und der linken Lasche (SX) gebildet wird.

5. Verfahren nach einem der vorhergehenden Ansprüche, wobei Schritt c) die folgenden Schritte umfasst:
c1) ein Rotieren des Werkzeugs (A) an der rechten Lasche (DX) und der linken Lasche (SX) des Metallblechs;
c2) ein Fortfahren mit einer initialen Penetration des Werkzeugs (4) in das Material des Metallblechs (21) bis eine vorbestimmte Tiefe (D) erreicht wird;
c3) ein Detektieren eines Kraftwerts, welcher zwischen dem Werkzeug (4) und dem Metallblech (21) generiert wird mit Hilfe eines Kraftsensors, welcher in dem Werkzeughaltekopf (3) angeordnet ist;
c4) ein Detektieren eines Temperaturwerts mit Hilfe eines Temperatursensors, welcher an dem Werkzeughaltekopf (3) positioniert ist;
c5) wenn der Kraftwert, welcher durch den Kraftsensor detektiert wird, eine vorbestimmte Kraftschwelle überschreitet und wenn der Temperaturwert, welcher durch den Temperatursensor gemessen wird, einen vorbestimmten Temperaturwert überscheitet, ein Aktivieren des Voranschreitens des Werkzeughaltekopfs entlang der Haupterstreckungsrichtung (X).

6. Verfahren nach Anspruch 5, wobei die vorbestimmte Kraftschwelle ein Wert wenigstens gleich wie 9000 N ist und wobei der vorbestimmte Temperaturwert wenigstens gleich wie 600°C und geringer als 700°C ist und wobei die Zahl von Umdrehungen des Werkzeugs (4) wenigstens gleich wie 300 rpm ist.

7. Eine Schweißmaschine (1) für eine Kokille (2), zum Herstellen einer Kokille (2) entsprechend dem Verfahren nach einem der vorhergehenden Ansprüche, wobei die Kokillenschweißmaschine (1) umfasst:
- einen Werkzeughaltekopf (3), welcher ein Werkzeug (4) zum Rührreibschweißen stützt;
- eine Werkzeughaltekopfbewegungsvorrichtung (10), zum Beispiel eine numerische Steuerungsmaschine mit drei Achsen, welche den Werkzeughaltekopf (3) stützt und wenigstens eine Verlagerungsanordnung (11), zum Beispiel einen oder mehrere Schlitten, umfasst, welche dazu geeignet ist, den Werkzeughaltekopf (3) auf kontrollierte Weise in einer Richtung, welche parallel zu einer Haupterstreckungsrichtung (X) der Kokille (2) ist, und in eine vertikale Richtung (Z) zu verlagern, welche einfallend oder senkrecht zu der Haupterstreckungsrichtung (X) ist.

8. Schweißmaschine (1) für eine Kokille (2) nach Anspruch 7, umfassend eine Arbeitsebene (P), welche dafür geeignet ist, die Kokille (2) während des Schweißens zu stützen, und einen Sicherungsrahmen (6), welcher lösbar an der Arbeitsebene (P) befestigt ist und einen oberen Rahmenabschnitt (61) umfasst, welcher von der Arbeitsebene (P) in der vertikalen Richtung (Z) beabstandet und dazu geeignet ist, eine Druckkraft auf die Kokille (2) in der vertikalen Richtung (Z) nahe einem Spalt (22) in der Kokille (2) auszuüben, welche zu schweißen ist.

9. Schweißmaschine (1) für eine Kokille (2) nach Anspruch 8, wobei der Sicherungsrahmen (6) eine Mehrzahl von Platten (62) umfasst, welche voneinander entlang der Haupterstreckungsrichtung (X) beabstandet sind und eine geformte konkave Fläche (621) aufweisen zum Beherbergen und zum wenigstens in eine Richtung senkrecht zu der Haupterstreckungsrichtung (X) in Position Halten der Kokille (2).

10. Schweißmaschine (1) für eine Kokille (2) nach Anspruch 8, wobei der Sicherungsrahmen wenigstens zwei vertikale Pfosten (64, 65) umfasst, welche an der Arbeitsebene (P) jeweils an der zu der Kokille (2) gegenüberliegenden Seite befestigt sind, wobei eine Leiste (641, 651) in einem oberen Bereich (64', 65`) des vertikalen Pfostens an jedem der vertikalen Pfosten (64, 65) befestigt ist, welche sich hauptsächlich in die Haupterstreckungsrichtung (X) erstreckt und welche dazu geeignet ist, eine Druckkraft in die vertikale Richtung (Z) auszuüben.

11. Schweißmaschine (1) für eine Kokille (2) nach Anspruch 10, umfassend untere Befestigungsmittel (642, 652), welche in einem unteren Bereich (64", 65") des vertikalen Pfostens befestigt sind, welcher der Arbeitsebene (P) in Bezug auf den oberen Bereich (64', 65`) am nächsten ist, Abstandselemente (7, 7'), welche an den unteren Befestigungsmitteln (642, 652), zum Beispiel Schrauben, befestigt und dazu geeignet sind, die Kokille lateral einzuschränken, um sie daran zu hindern, sich entlang der transversalen Richtung (Y) zu bewegen, welche senkrecht zu der Haupterstreckungsrichtung (X) und der vertikalen Richtung (Z) ist.

12. Schweißmaschine (1) für eine Kokille (2) nach einem der vorherigen Ansprüche, umfassend eine Stützstruktur (5), welche dazu geeignet ist, in der inneren Kavität (I) der Kokille positioniert zu sein, wobei die Stützstruktur (5) eine Unterstützungsfläche (51) umfasst, welche der mechanischen Druckkraft entgegenwirkt, welche durch das Werkzeug (4) auf das Metallblech ausgeübt wird, wenn das Schweißen ausgeführt wird.

13. Schweißmaschine (1) für eine Kokille (2) nach einem der vorherigen Ansprüche, wobei der Werkzeughaltekopf (3) einen inneren Flüssigkeitskühlkreislauf und wenigstens einen inneren Schweißgas führenden Kreislauf umfasst, wobei der innere Schweißgas führende Kreislauf eine Gasausgangsöffnung umfasst, welche um das Werkzeug positioniert und dazu geeignet ist, ein Gas, bevorzugt ein Inertgas, derart abzugeben, dass eine inerte Atmosphäre während des Schweißens sichergestellt ist, um einen Einschluss anderer Substanzen in dem Schweißen zu verhindern.

14. Schweißmaschine (1) für eine Kokille (2) nach einem der vorherigen Ansprüche, wobei das Werkzeug (4) aus einer D2M W-Ni-Mo-Fe-Legierung gefertigt ist.

## Revendications

1. Procédé de fabrication d'une lingotière (2), par exemple une lingotière de coulée, comprenant les étapes consistant à :
a) fournir une feuille de cuivre (21) enroulée autour d'une direction d'extension principale (X) de manière à englober une cavité intérieure (1) et de façon telle qu'un rabat gauche (SX) et un rabat droit (DX) de la feuille métallique (21) sont agencés proches et l'un devant l'autre, ladite feuille métallique (21) étant agencée sur un plan de travail (P) ;
b) fournir une tête porte-outil (3), qui peut effectuer une translation au moins dans une direction parallèle à la direction d'extension principale (X), ladite tête porte-outil (3) supportant un outil (4) destiné à un soudage par friction malaxage ;
c) faire pivoter l'outil (4) au niveau du rabat droit (DX) et du rabat gauche (SX) de la feuille métallique (21) et réaliser un soudage entre le rabat droit (DX) et le rabat gauche (SX) par soudage par friction malaxage jusqu'à ce qu'une lingotière (2) soit obtenue.

2. Procédé selon la revendication 1, dans lequel, avant l'étape c), le procédé comprend l'étape consistant à positionner une structure de support (5) dans la cavité intérieure (I), ladite structure de support (5) comprenant une surface de soutien (51) qui s'oppose à la force de pression mécanique exercée par l'outil sur la feuille métallique lors de la réalisation de l'étape c).

3. Procédé selon l'une quelconque des revendications précédentes, comprenant l'étape consistant à refroidir la tête porte-outil (3) au moyen d'un liquide de refroidissement pendant l'étape c).

4. Procédé selon l'une quelconque des revendications précédentes, dans lequel, pendant l'étape c), le procédé comporte la distribution d'un gaz inerte, comme de l'argon, sur le joint de soudure qui est formé entre le rabat droit (DX) et le rabat gauche (SX), autour de l'outil rotatif (4).

5. Procédé selon l'une quelconque des revendications précédentes, dans lequel l'étape c) comprend les étapes suivantes :
c1) la rotation de l'outil (A) au niveau du rabat droit (DX) et du rabat gauche (SX) de la feuille métallique ;
c2) la réalisation d'une pénétration initiale de l'outil (4) dans le matériau de la feuille métallique (21) jusqu'à atteindre une profondeur prédéterminée (D) ;
c3) la détection d'une valeur de force générée entre l'outil (4) et la feuille métallique (21) au moyen d'un capteur de force agencé dans la tête porte-outil (3) ;
c4) la détection d'une valeur de température au moyen d'un capteur de température positionné sur la tête porte-outil (3) ;
c5) lorsque la valeur de force détectée par le capteur de force dépasse un seuil de force prédéterminé et lorsque la valeur de température mesurée par le capteur de température dépasse une valeur de température prédéterminée, l'activation de l'avancement de la tête porte-outil dans la direction d'extension principale (X).

6. Procédé selon la revendication 5, dans lequel le seuil de force prédéterminé est toute valeur au moins égale à 9000 N et dans lequel la valeur de température prédéterminée est au moins égale à 600 °C et inférieure à 700 °C, et dans lequel la vitesse de rotation de l'outil (4) est au moins égale à 300 tr/min.

7. Machine de soudage (1) pour lingotière (2), destinée à la fabrication d'une lingotière (2) conformément au procédé selon l'une quelconque des revendications précédentes, ladite machine de soudage de lingotière (1) comprenant :
- une tête porte-outil (3) supportant un outil (4) permettant un soudage par friction malaxage ;
- un appareil de déplacement de tête porte-outil (10), par exemple une machine à commande numérique comportant trois axes, supportant la tête porte-outil (3) et comprenant au moins un assemblage pour translation (11), par exemple un ou plusieurs chariots, approprié pour réaliser une translation de la tête porte-outil (3) d'une manière commandée dans une direction parallèle à une direction d'extension principale (X) de la lingotière (2), et dans une direction verticale (Z) qui est incidente ou perpendiculaire à la direction d'extension principale (X).

8. Machine de soudage (1) pour lingotière (2) selon la revendication 7, comprenant un plan de travail (P) approprié pour supporter la lingotière (2) pendant le soudage, et un cadre de verrouillage (6), fixé de manière amovible au plan de travail (P) et comprenant une partie de cadre supérieure (61) espacée du plan de travail (P) dans la direction verticale (Z) et appropriée pour exercer une force de pression sur la lingotière (2) dans la direction verticale (Z), à proximité d'une fissure (22) dans la lingotière (2) à souder.

9. Machine de soudage (1) pour lingotière (2) selon la revendication 8, dans laquelle le cadre de verrouillage (6) comprend une pluralité de plaques (62) espacées les unes des autres dans la direction d'extension principale (X) et ayant une surface concave façonnée (621) permettant de loger et maintenir la lingotière (2) en place au moins dans une direction perpendiculaire à la direction d'extension principale (X).

10. Machine de soudage (1) pour lingotière (2) selon la revendication 8, dans laquelle le cadre de verrouillage comprend au moins deux montants verticaux (64, 65), fixés au plan de travail (P) de part et d'autre de la lingotière (2), un bandeau (641, 651) étant fixé, dans une région supérieure (64', 65') du montant vertical, sur chacun desdits montants verticaux (64, 65), s'étendant principalement dans la direction d'extension principale (X) et approprié pour exercer une force de pression dans la direction verticale (Z).

11. Machine de soudage (1) pour lingotière (2) selon la revendication 10, comprenant des moyens de fixation inférieurs (642, 652), fixés dans une région inférieure (64", 65") du montant le plus proche du plan de travail (P) par rapport à la région supérieure (64', 65'), des éléments d'entretoise (7, 7') étant fixés auxdits moyens de fixation inférieurs (642, 652), par exemple des vis, appropriés pour contraindre latéralement la lingotière afin de l'empêcher de se déplacer dans la direction transversale (Y) perpendiculaire à la direction d'extension principale (X) et à la direction verticale (Z).

12. Machine de soudage (1) pour lingotière (2) selon l'une quelconque des revendications précédentes, comprenant une structure de support (5), appropriée pour être positionnée au sein de la cavité intérieure (I) de la lingotière, ladite structure de support (5) comprenant une surface de soutien (51) qui s'oppose à la force de pression mécanique exercée par l'outil (4) sur la feuille métallique lors de la réalisation du soudage.

13. Machine de soudage (1) pour lingotière (2) selon l'une quelconque des revendications précédentes, dans laquelle la tête porte-outil (3) comprend un circuit de refroidissement liquide intérieur et au moins un circuit de transport de gaz de soudage intérieur, ledit circuit de transport de gaz de soudage intérieur comprenant une bouche de sortie de gaz positionnée autour de l'outil et appropriée pour distribuer un gaz, de préférence un gaz inerte, de manière à assurer une atmosphère inerte pendant le soudage pour empêcher des inclusions d'autres substances dans la soudure.

14. Machine de soudage (1) pour lingotière (2) selon l'une quelconque des revendications précédentes, dans laquelle l'outil (4) est constitué d'un alliage D2M W-Ni-Mo-Fe.
